# EUROPEAN PATENT APPLICATION

(11) **EP 4 001 002 A1**
(43) Date of publication of application: **25.05.2022**
(21) Application number: 21203002.7
(22) Date of filing: 15.10.2021
(51) Int. Cl.: B60N 2/015

(54) **ANCHORAGE SYSTEMS**

(30) Priority: 12.11.2020 GB 202017852
(71) Applicant: BraunAbility UK Limited, Coat Road Martock Somerset TA12 6EY (GB)
(72) Inventor: PAYNE, Fraser, Graham, Crewkerne, TA18 8DQ (GB); BUTCHER,, Robert James, Martock, TA12 6EY (GB)
(74) Representative: Mewburn Ellis LLP

(57) **Abstract**

Various embodiments provide an anchorage system comprising an elongate track defining an interior channel and an anchorage device securable at any of plural longitudinal positions on the track. The track comprises a base and has first and second sides, a longitudinal channel opening which opens in an outward face of the track and is defined between first and second retaining flanges at the outward face, said flanges projecting in towards one another and overlying the interior channel, the flanges having edge faces directed laterally towards one another across the channel opening and outward surfaces which are comprised in the outward face of the track. The interior channel is defined by an outwardly-directed surface of the base, laterally inwardly-facing side wall surfaces defining lateral extremities of the channel, and by inwardly-directed faces of the retaining flanges directed towards the base. The anchorage device comprises a body, at least one retaining foot and a stem portion connecting the body and the at least one retaining foot, the foot being laterally wider than the stem portion and the anchorage device being engageable in the track with the foot in the interior channel, the stem portion extending through the channel opening between the retaining flanges and the body outside the track with an inward face of the body overlying the outward face of the track. The anchorage device is tiltable relative to the track around a longitudinal axis, under lateral load applied to the body of the anchorage device, to a tilted position at which tilt is limited by engagement of an outward face of the foot at the first side of the track with the inward face of the first retaining flange at respective contact regions of the foot and flange, and/or by engagement of an undersurface of the device body at the second side of the track against the outward face of the track, and/or by engagement of an inward face of the foot against the outwardly-directed surface of the base of the track. The inward face of the retaining flange at said contact region is not angled outwards in the direction towards the median line of the channel, or is angled outwards at an angle of less than 10°.

## Description

### FIELD OF THE INVENTION

This invention relates to anchorage systems of the kind in which an anchorage device can be held at any of various selectable positions along a fixed track, by means of one or more relatively laterally enlarged feet of the anchorage device which can be retained by opposed flanges of the track which overhang an interior channel thereof. Such anchorage systems are widely used for securing seating and other appliances such as wheelchair restraints and securing belts in vehicles. In preferred embodiments, the present proposals relate to such anchorage systems for installation in road vehicles such as vans, buses, minibuses, coaches and the like, and to such vehicles with such anchorage systems installed.

### BACKGROUND

Such systems usually have the track extending longitudinally of the vehicle, so as best to exploit the strength deriving from the extended length of the track being fixed to the floor or wall (or sometimes roof/ceiling) of the vehicle. A collision is typically at the front of the vehicle and involves a longitudinal load on the secured object, such as a seat, in the forward direction and above the anchorage, tending to pull the track upwardly at the rear securement of the secured object. Usually the tracks and anchorage devices are adapted for variable longitudinal positioning of the devices in the tracks, by the device being securable relative to the track at any of a range of available positions, by means of a locking mechanism engageable with the track at the selected position. It is also usually preferred that the device can be removed from or attached to the track at any of a range of positions. One widely used design, also a preferred option in the present proposals, has a track in which the retaining flanges are formed with a series of periodic cut-outs, and the anchorage device has correspondingly-spaced feet which can be inserted into or lifted out of the track at these cut-outs for removal or attachment of the anchorage device. The feet are connected to the body of the device by narrower stem portions which are slidable, either partially or freely, along the track opening between the retaining flanges with the feet moving along the channel interior. The feet can thus be slid away from the cut-out regions to be retained by the flanges, whereupon the device is locked in longitudinal position by a locking mechanism e.g. by lowering a non-slidable plunger of the device into a cut-out, by driving relative longitudinal movement between slidable and non-slidable track-engaging formations of the device, etc. These variants and options are well-known. Interaction of the feet and flanges prevents the device from pulling outwardly from the track. Longitudinal engagements, such as between the locking plunger and shoulders of the cut-outs, and/or in some designs between projections on the stem portion which also engage shoulders of cut-outs so that the stem is only partially slidable as mentioned above, prevent the device from being pulled along the track.

In some cases, it is desired to align the rail of such an anchorage system transversely relative to a vehicle, or in some other situation in which a load on an attached anchorage device is envisaged in a direction lateral to the direction of the rail (taking the rail length direction as the longitudinal direction, without reference to its orientation in a vehicle or on a structure). We find that conventional rails have deficiencies in withstanding lateral loads applied to the anchorages. The load is applied outwardly of the rail's channel opening, and causes forcible tilting of the anchorage device relative to the rail around a longitudinal axis. Assuming that the strength of the rail is not exceeded, the tilt is arrested at a tilted position by engagement of the outward faces of the feet at one side of the track with the inward face of the retaining flange at that side. On the other side of the track, there may be engagement of the side edges of the feet inwardly with a bottom or base (outwardly-directed) surface of the interior channel, or engagement of the underside of the anchorage device body against the outward face of the track e.g. on top of the retaining flange or laterally further out. Under such loads applied to conventional anchorage systems, there is a tendency for the track retaining flange on the side away from which the load is directed to be deformed outwardly by the outward pull of the anchorage foot/feet, and this represents a limit on the lateral load-bearing capacity.

It would be desirable to enable better strength of an anchorage system of the kind described with respect to lateral loads.

### THE INVENTION

After investigation of the above interaction between an anchorage device and its track under lateral load, we now make new structural proposals for such anchorage systems, enabling an improvement in lateral load-bearing performance. In particular, we have noted that the orientation of the mutually contacting surface regions of the feet and flanges in conventional systems in the tilted position tends to reduce the effective strength of the flange under lateral loads. We have devised improved forms for these components which are set forth herein. In an additional preferred feature, we provide structures to help ensure that anchorage devices used with the track are suitable to provide the improved effects disclosed herein.

In a first aspect we provide an anchorage system comprising an elongate track and an anchorage device securable at any of plural longitudinal positions on the track;
the track comprising a base and having first and second sides, a longitudinal channel opening which opens in an outward face of the track and is defined between first and second retaining flanges at the outward face, said flanges projecting in towards one another and overlying the interior channel, the interior channel being defined by an outwardly-directed base surface, laterally inwardly-facing side wall surfaces defining lateral extremities of the channel, and by inwardly-directed faces of the retaining flanges directed towards the base surface, the flanges also having edge faces directed laterally towards one another across the channel opening and outward surfaces which are comprised in the outward face of the track;

In an embodiment, the track may be an extruded track or an extrudable track (e.g. a track having a shape which is capable of being manufactured via an extrusion process).
the anchorage device comprising a body, at least one retaining foot and a stem portion connecting the body and the at least one retaining foot, the foot being laterally wider than the stem portion and the anchorage device being engageable in the track with the foot in the interior channel, the stem portion extending through the channel opening between the retaining flanges and the body outside the track with an inward face of the body overlying the outward face of the track.

In an embodiment, the at least one foot connected to the body of the device by the narrower stem portion is slidable, either partially or freely, along the track opening between the retaining flanges with the at least one foot moving along the channel interior. For example, the at least one foot may take the form of a simple fixed slider, rather than a more complicated roller.

In an embodiment, the retaining flanges of the track may be formed with a series of periodic cut-outs. In an embodiment, the anchorage device may have correspondingly-spaced feet which can be inserted into or lifted out of the track at these cut-outs for removal or attachment of the anchorage device. In an embodiment, the feet can be slid away from the cut-out regions to be retained (e.g. contacted) by the flanges.

The anchorage device is tiltable relative to the track around a longitudinal axis, under lateral load applied to the body of the anchorage device, to a tilted position at which tilt is limited by engagement of the outward face of the foot at the first side of the track with the inward face of the first retaining flange at respective contact regions of the foot and flange. Also in the tilted position, tilt may be limited by engagement at the second side of the track by an undersurface of the device body against an outward face of the track, and/or by engagement of an inward face of the foot against an outward face of a base of the track.

Note: in this description the term "outward" is used throughout with reference to the track, away from the track base and out through the channel opening of the track. Inward is the reverse direction, towards the interior or base of the track. In particular, the corresponding terms are used for the foot/feet of the anchorage device as well, for consistency. In a typical use, when the track is used on the floor of a vehicle, outward will be upward and inward will be downward, and the inward face of the device foot will be the downward face thereof when *in situ,* i.e. the face which is outward relative to the anchorage device.

Further references include the longitudinal direction of the track (which is usually straight), lateral directions which are orthogonal to the inward/outward sense, and a median plane of the track extending longitudinally, containing the inward/outward direction and orthogonal to the lateral direction lying half-way across the channel opening. A "track plane" of the present discussion is a longitudinal plane perpendicular to the median plane, and thus generally parallel in most cases to the outward face of the track, and to a plane containing corresponding points of the retaining flanges. Thus, the lateral extent of the interior channel (seen in transverse cross-section) will be generally parallel to the track plane, as will be the outward face of the track and the undersurface of the device body when it is not tilted.

A first proposal relates to the formation of the contact regions of the foot and flange. It will be understood that where the retaining foot of the device is in fact a series of spaced feet, as is common, the contact regions will correspondingly be at locations spaced along the arrangement, and should be considered in transverse cross-section taken at the regions where there is contact. A first proposal is that the inward face of the retaining flange at the contact region should not be substantially angled outwards in the direction towards the median line of the channel, because such an angle can contribute to a tendency for the retaining flange to peel outwards under extreme load with tilt of the device. Thus, that outward angle of the retaining flange inward surface at or over the contact region is preferably less than 10°, more preferably less than 5°, more preferably about 0°, or less than 0°. The angle can be considered relative to the track plane. This constraint may apply to the entirety of the region from the laterally-outermost contact point to the laterally-inmost contact point of the flange inward face. It reduces the likelihood of a cam action between foot and flange tending to cause outward deformation of the flange under extreme load. It also tends to imply - if the track outward face is generally flat - that the flange does not significantly decrease in thickness from its root to its edge, again helping to avoid a peel-type failure mode. By aligning the force at the contact region substantially with the inward/outward direction, the peeling tendency can be reduced.

It is also possible that the inward flange surface has distinct lateral sub-regions, which can be the sub-regions of the contact region, and one, some or all of them may individually satisfy the above angle feature. The totality of the flange inward surface may or may not satisfy it, or satisfy it to a different degree. Alternatively stated, the flange inward surface may be stepped in form (in transverse cross-section). This enables pull force at the contact interface between foot and flange to be better aligned with the inward/outward direction and more perpendicular to the contact surfaces under lateral load, and thereby reduce the outward peeling tendency, even if the inward flange surface as a whole has an outward angle. Where the flange inward surface has a negative (inward) angle as discussed, it is effectively slightly re-entrant in relation to the channel interior. This provides excellent retention and strength. However, if a foot of the device is to be made complementary in form, with a laterally-distal portion raised outward relative to a laterally-proximal (towards the median plane) portion, it might be difficult to make the feet or to make the channel, especially if casting methods are used, and the device might be difficult to move in the channel in some cases. Accordingly the stepped proposal also enables a structure in which the inward surface of the flange and/or the outward surface of the foot may have some of the conventional general inclination (i.e. inward towards the side of the track, downward, if used on a floor) while sub-regions thereof may nevertheless meet between foot and flange at a lesser angle, e.g. substantially parallel to the track plane.

A second proposal, combinable with the first in any of its features, is that the outward surface of the device foot may have angle and form features corresponding to those described above for the flange inward surface, in the general sense and also with regard to the preferred and optional features. Alternatively stated, that the outward face of the device foot may have angle and form features generally complementary to those of the inward face of the flange, preferably in the tilted condition at least. The sense of the angles is reversed, in a self-explanatory fashion. That is, that any inward angle of the foot outward surface relative to the track plane, over the contact region, or over one or more sub-regions thereof, is preferably less than 10°, more preferably less than 5°, more preferably about 0°, or less than 0°.

A further proposal herein to improve lateral load-bearing capacity, especially in combination with the features proposed above, is that the shape of the foot and anchorage device is adjusted in relation to the shape of the track and its channel so that the tilt angle in the tilted position, before any deformation of the track, is 4° or less, 3° or less or 2° or less relative to the non-tilted position. This can be achieved in a variety of (mostly self-evident) ways by increasing the closeness of fit between the device and track, particularly at the regions on the second side referred to above, namely the inward face of the foot on the second side in relation to the base surface of the track at that region, and the undersurface of the device body in relation to the inward face of the track.

The vertical tilt angle can be reduced in general terms by reducing the vertical (inward/outward) clearance and/or by increasing the lateral extent of these device components (body or foot).

For this, one possible characteristic feature is that to provide mutually inter-engaging formations on the underside of the device body at the second side, and on the outward face of the track at the second side. At least when the device moves to the tilted position, these formations engage one another to resist further lateral movement of the device body relative to the track. Preferably an inward (downward) protrusion on the device body undersurface engages in a recess of the outward track face, such as an indentation or groove. Such an engagement increases the capacity of the track as a whole to take up a rotational loading from the device before failure. A compressive engagement down onto the outward face of the track is a high-strength engagement.

A protruding formation on the body undersurface may interrupt a flat undersurface. Or, it may be provided at a lateral edge of the undersurface. In one embodiment the outward face of the track is provided with the formation defining an upstanding shoulder (not necessarily at an abrupt angle, provided that there is a change of angle) which the device body edge meets at the tilted position, to resist further tilting and take up rotational force.

A further option for limiting or controlling tilt is that the inward face of the foot at the second side, has its maximum inward extent not at its lateral extreme but further in, that is, it has an inward protrusion relative to the lateral edge, positioned towards the centre relative to the lateral edge. This protrusion can be adapted to meet an outward surface of the track base to limit tilt. This may enable the lateral extremities of the channel interior to be kept small in dimension, thereby increasing relative strength under the wall of the track and/or the root of the retaining flange.

It will be understood that these tilt-limiting formations of the device and/or track need not be longitudinally aligned with the contact regions of feet and track flanges, if these are spaced.

The track is usually an extruded component, so that lateral-section shape features described above preferably extend continuously along it. Where periodic cut-outs are provided in the retaining flanges, as is well known, these can be formed after extrusion by drilling or the like.

The anchorage device, or at least the portion thereof having the feet and stem portion if it is a multi-component article, is typically a machined or cast component and the formations may be localized on the foot or feet which - unlike many conventional designs which have simple circular "mushrooms" for the feet - may lack circular symmetry. Equally, body formations which engage track outward face formations may be longitudinally localized on the device, while on the track they are typically formed as longitudinally continuous forms (shoulders, grooves etc).

It is preferred that the foot is a cast metal component, to facilitate formation of desired shapes on its inward and outward faces. As known, the stem portion may have an individual stem for each of respective feet, or may extend continuously e.g. as a keel formation connecting plural feet, particularly when the feet and stem portions may be formed together with the anchorage device body as a single casting. Additionally, e.g. as is known and described in our EP2206623A, the stem portion may comprise abutment formations which abut complementarily against shoulder portions of cut-outs of a track having periodic cut-outs, enhancing strength against longitudinal pull. A locking mechanism, whereby the anchorage device is held in position relative to the track in which - at least for track having periodic cut-outs - the feet are trapped by the retaining flanges, may be of any kind such as any mentioned above.

In some situations the likelihood of a heavy lateral load exists only from one side, so that the concept can be considered broadly as above, with the retaining flange having the adaptation on the first side and formations for the counter-engagement being on the second side. In practice it is of course convenient and safe that the track at least should be symmetrical, with the first and second sides similarly formed, and the same may be true of the anchorage device in most cases so that the user need not concern themselves with orientation on installation and use.

The anchorage device may be any of e.g. an anchorage for a seat, table, belt or other furnishing. It may be part of a seat. Unless it is formed with one elongate continuous foot, preferably it has two, three or more feet. The skilled person is aware of a wide range of devices, especially those used movably/removably within vehicles, that exploit track mounting and anchorages of the kind described, and the inventive concept can be applied to these.

A further novel feature proposed herein is that the anchorage device and track are provided with complementary shape formations, preferably within the channel interior, inhibiting insertion of an anchorage device not adapted for use with the track. A particular proposal is that, at a generally central (median) region of the track base, corresponding to the median region of the inward surface of a foot in use, the track has a local upstanding or projecting region. The foot of the anchorage device can be formed with a corresponding recess to accommodate the upstanding region. These complementary formations need not be functional for anchorage in itself, nor in resisting rotation in the tilted position, but may prevent conventional anchorage device feet - which typically might be insufficiently recessed at the centre on the inward face - cannot be inserted into the track.

Further aspects are set out in the claims, including the track and anchorage device provided separately, and an installation in a vehicle in which the track extends transversely of the vehicle. Methods of using and installing the systems are further novel aspects of our proposals.

### BRIEF DESCRIPTION OF THE DRAWINGS

Examples are now described, with reference to the accompanying drawings in which:
Fig. 1 is a perspective view of a known type of anchorage system, showing an anchorage device fitted into a segment of conventional track;
Fig. 2 shows the Fig. 1 anchorage device in more detail;
Fig. 3 shows the conventional track segment alone;
Fig. 4 is a transverse cross-section showing the conventional device at a tilted position in the track, resulting from a lateral load of the device;
Fig. 5 is a perspective view, corresponding to Fig. 1, of a first embodiment of anchorage system embodying our proposals;
Fig. 6 shows the anchorage device of the first embodiment, omitting a locking plunger;
Fig. 7 shows the track of the first embodiment;
Fig. 8 shows the anchorage system of the first embodiment with the anchorage device in a tilted position under lateral load;
Fig. 9 shows an anchorage system of a second embodiment;
Fig. 10 shows the anchorage device of the second embodiment, with a plunger omitted;
Fig. 11 shows the track of the second embodiment and
Fig. 12 is a transverse cross-section showing the anchorage system of the second embodiment in the tilted position of the anchorage device.

### DETAILED DESCRIPTION

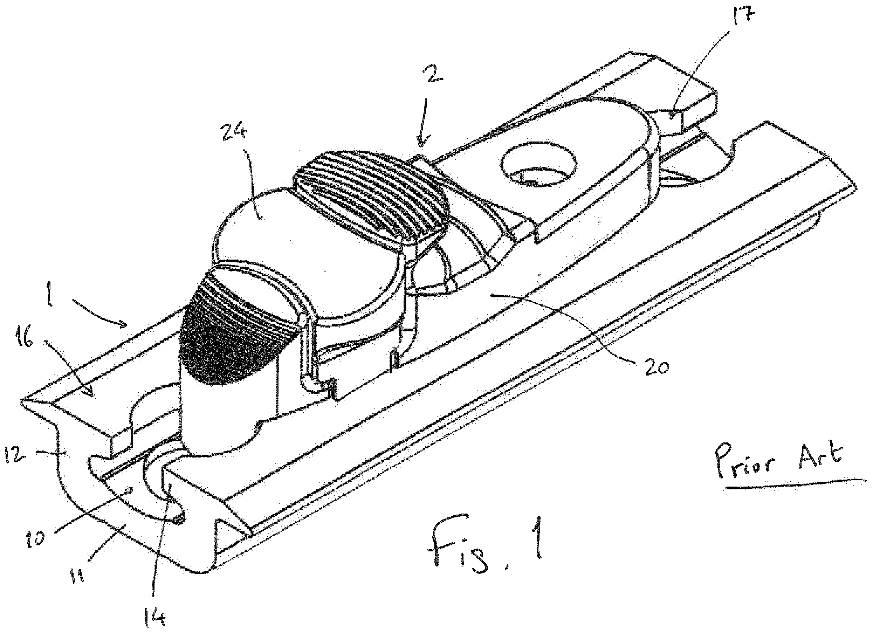

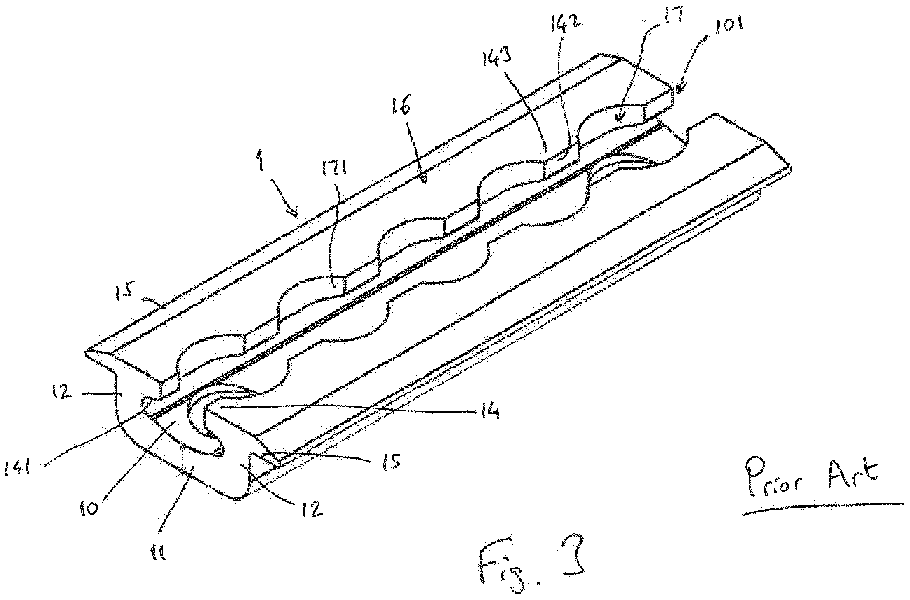

Figs. 1-4 show a prior art system. An anchorage device 2 is fitted releasably to a track 1. The track is a one-piece metal channel member having a base 11, side walls 12, a channel interior 10 defined between the side walls 12 and above the base 11, retaining flanges 14 extending inwardly above the channel interior 10 from the tops of the side walls and defining between them a channel opening 101 extending along the median line of the track, and outward flanges 15 extending outwardly from the tops of the side walls. The track 1 is designed to be mounted in an elongate slot or groove in e.g. a floor, wall or ceiling of a vehicle, with the base recessed and the undersides of the flanges 15 lying against the support surface. The track has an outward face 16 including the inclined tops of the flanges 15 and a single flat face above the side walls 12 and including the outward surfaces 143 of the inward flanges 14. The outward track face 16 is interrupted by the central channel opening 101, which also features a periodic series of circular cut-outs 17 in the well-known way so that the mutually-opposed surfaces of the first and second retaining flanges 14 are partly flat edge faces 142 and partly arcuate cut-out surfaces with shoulder regions 171 towards their ends. The track 1 is preferably an aluminium extrusion. The cut-outs may be formed by drilling, as is known. A skilled person is aware that tracks of this general kind may be made with various forms, and in particular the disposition of mounting flanges may be different from that shown here depending on the intended mounting position.

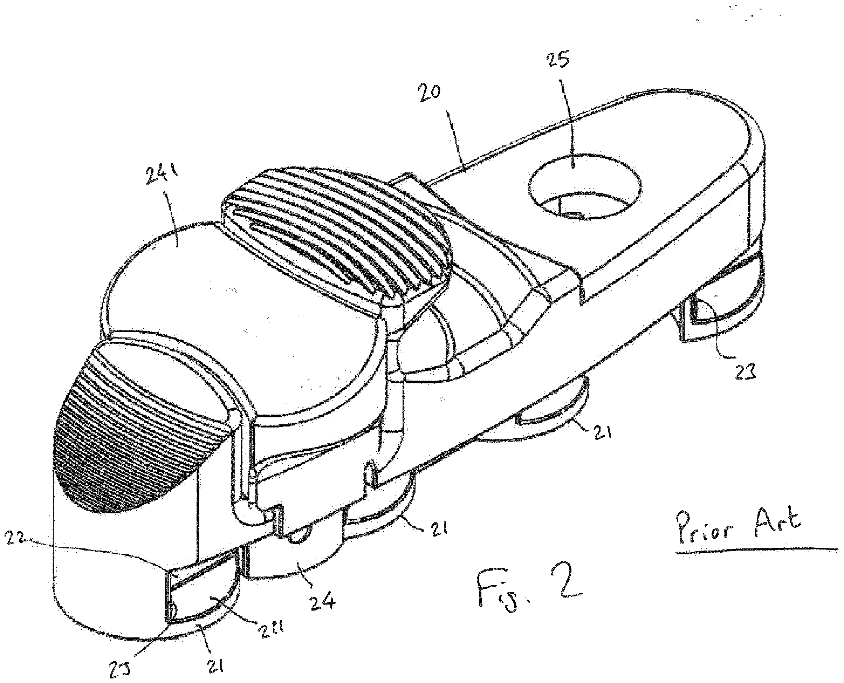

The anchorage device 2 has a main body 20 carrying four generally circular feet 21 connected to the body by a stem portion or keel 22. In this embodiment the anchorage device 2 is itself non-functional beyond its anchorage function, but has a mounting 25 for an associated component, e.g. a seatbelt mount or the like. In this embodiment the feet 21 are cast in one piece with the keel 22 and body 20. The feet are sized and spaced so that they can fit down in a corresponding series of the track cut-outs 17. A plunger 24 with a grip 241 exposed at the top of the body 20 is mounted vertically and slidably in the body, so that it can be lifted against a spring bias which urges it downwards to the position of Fig. 2. The plunger 24 is half-way between two feet 21. With lifting of the plunger 24 against the spring, the device 2 can be inserted into the track through respective cut-outs thereof and then slid along half a space allowing the plunger 24 to drop into a cut-out and lock it in place, and bringing longitudinally-directed shoulder formations 23, formed integrally with the keel 22 and feet, into conforming contact at the shoulder regions 171 of the cut-out edges. In this condition the anchorage withstands both outward pull and longitudinal pull with high strength, the shoulders 23 contributing to the longitudinal strength in combination with the dropped plunger 24. All of this is known, and it will be understood that various other kinds of anchorage device, as well as articles such as seats etc. incorporating such anchorage formations, are well known and may be used.

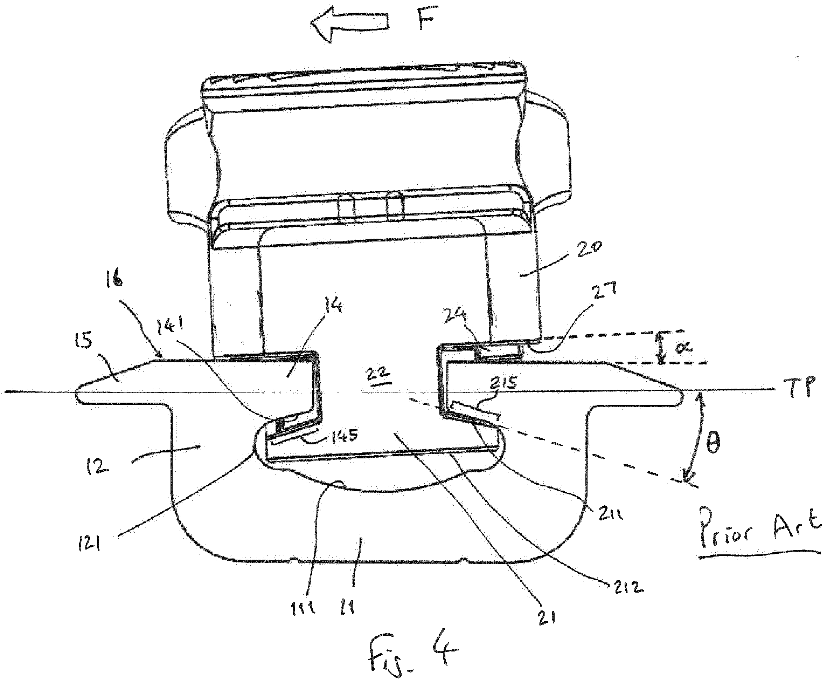

Fig. 4 shows the prior art device under a lateral load, indicated by arrow "F", causing it to tilt around a longitudinal axis relative to the track 1. Fig. 4 indicates a track plane "TP" parallel to the track's outward face 16 and orthogonal to a median plane (not indicated) extending along the track. A base whose vertical level is not significant - can be used as an angular reference for the tilted and inclined parts and regions of the structure.

In the tilted position shown, representing a moderate load under which there is no significant deformation of the structure, the device 2 tilts bringing the outward surfaces 211 of its feet into contact against the inward surface 141 of the retaining flange 14 on a first side (the right-hand side shown) while on the second side the foot does not contact the track channel interior; rather the tilt is limited on that side by contact of the laterally-outward edge of the device body against the flat top outward surface 16 of the track. There is contact, or near-contact, between foot surface 211 and flange surface 141 over a contact region indicated as a region 215 of the flange and a region 145 (shown on the second side, for clarity) of the foot.

The track profile shown is a conventional one, designed for easy manufacture and combination of the device feet, combined with strength of the track against usual forces, especially longitudinal and outward forces. The contact region 215 of the flange inward surface 141 makes an angle to the track plane of about 15° in the tilted position shown. It is substantially, even if not exactly, contacted by the corresponding contact region 145 of the device foot 21.

Our testing has shown that when under lateral loads, this conventional track/foot form represents a weakness in that the action of the out-lifting first side of the foot 21 against the sloping underside of the flange 14 tends to push or peel the flange 14 out laterally out sideways as well as upwardly, this lateral action causing the flange to bend out without fully exerting its resistance to breaking at the root at the top of the side wall.

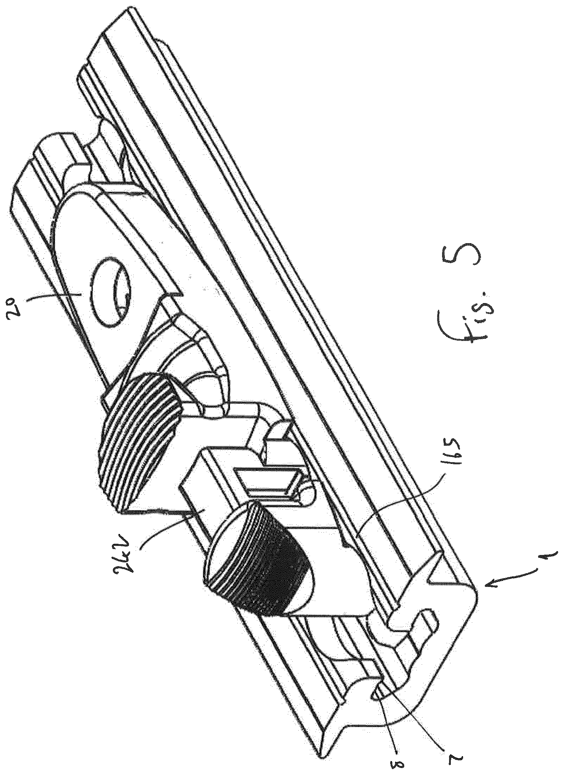

A first embodiment of our proposals is shown in Figs. 5-8, which correspond in presentation to Figs. 1-4 and the same reference numerals are used insofar as the same components and elements are present. Incidentally the device 2 is shown without its plunger 24, exposing the plunger mount 242 of the body; this is not significant. The plunger is present in the device as used.

In this system the inter-fitting parts of the device and track are differently formed. The device foot 21 more closely fills and complements the channel interior 10. The inward surfaces of the flanges 14 of a contact region 215 with a (laterally) outer sub-region 8 substantially parallel to the track plane and an inner sub-region 7 also substantially parallel to the track plane, with a step 9 between them so then the inner region 7 lies inwardly (in the vertical or inward/outward sense) of the outer sub-region. Thus, unlike the prior art contact region 215 of Fig. 4 which made about 15° positive angle with the track plane, the corresponding region in the present embodiment makes a slight negative angle with the track plane. This is because of the step. The individual sub-regions make a substantially 0 angle with the track plane. The result is a slight overhang effect, or re-entrant form of the flanges 14 at the interior.

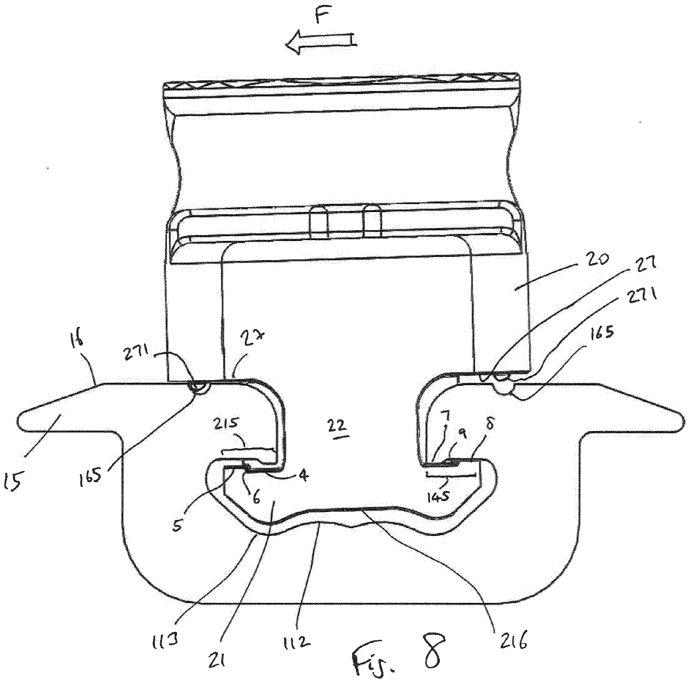

Correspondingly, the outward surfaces 211 of the feet 21 have a form, where they underlie the flanges and therefore establish a contact region 145 with them, which again makes a slightly negative angle to the track plane in the angle convention used herein, having (laterally) inner and outer sub-regions 4,5 connected through a step 6 whereby the outer sub-region 4 is recessed outwardly (in the vertical sense) relative to the outer sub-region 5. These formations complement the flange formation so that firstly, when they meet under application of a lateral force "F" as shown in Fig. 8, the force between them acts substantially perpendicular to their abutting surfaces at both the inner and out sub-regions thereof, and moreover substantially perpendicular to the general direction of the projection of the flanges 14 so that a sliding or peeling action is minimised. We find that this increases the failure strength for lateral load.

A further feature here is limitation of the tilt movement. Firstly, the components are relatively formed and dimensioned so that when the tilt reaches contact as shown in Fig. 8, limited by the above-mentioned contact of the foot with the flange combined with, on the second side, contact of the body underside against the track outward surface, the tilt angle of the body relative to the track plane TP is less than in the conventional device. For example it may be less than 4°, perhaps about 2°, compared with the prior art device in which the angle at tilt contact is typically less than 6° but maybe about 4°. This closer fit helps to square the contact between foot and flange in the corresponding direction of force application.

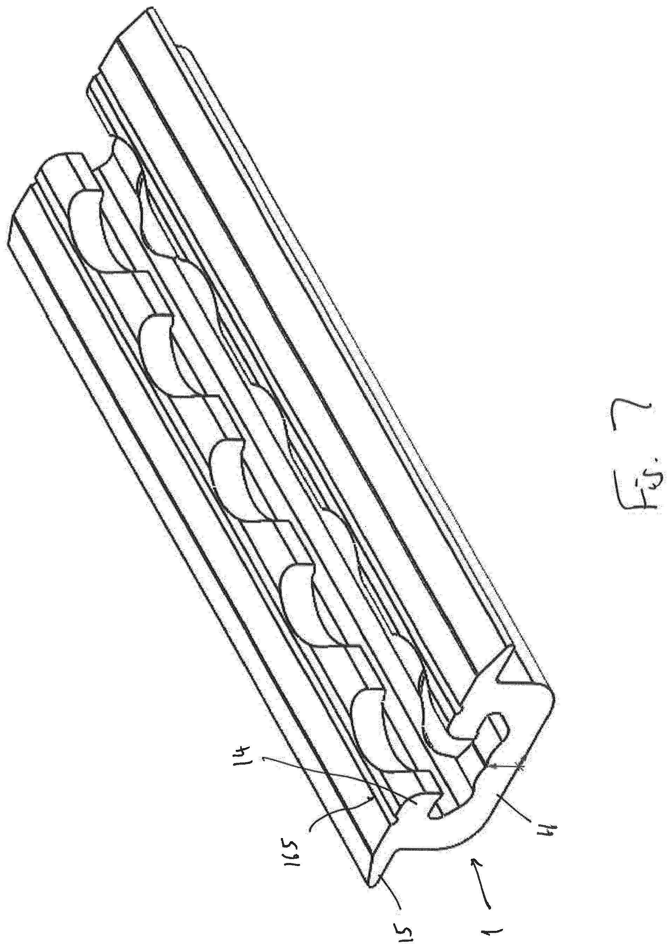

A further refinement is the provision of a depression 165 in the outward surface of the track towards the lateral edge of the region overlain by the undersurface of the device body. In this embodiment the depression is a generally part-circular-section groove extending longitudinally, and visible also in Figs. 5 and 7. The body undersurface 27 carries a corresponding part-circular-section projection 271 - one or more local nibs, or a longitudinally-extending rib - at each side, positioned so that when a side of the device tilts into contact with the track outer surface 16, the projection 271 enters the recess 165 and resists lateral movement, helping to reduce the stress on the parts of the track flange contacted from beneath by the foot 21.

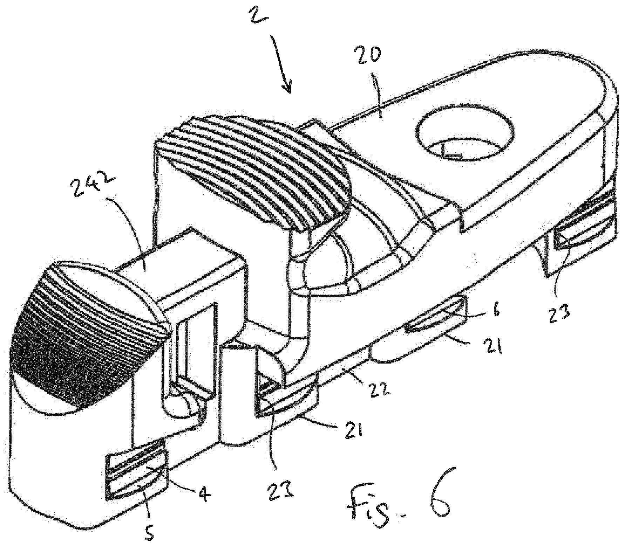

It should be understood that while the feet may or may not be substantially circular in plan outline, the contact area formations described herein do not generally extend around circularly, but extend longitudinally with maintained cross-sectional shape at the contact region as seen in Fig. 6, so as to complement the corresponding contact regions of the track flange over an appreciable length.

Fig. 8 shows a further refinement in which the base surface has a central outward eminence 112 between a pair of lateral troughs 113, whereas the inward surface of the foot 21 has a central recess 216 to accommodate the base eminence 112, with downward ridges to either side which project into the troughs 113 of the base. These formations are not designed to contact one another, but to provide a "key" relation between the components so that a device with feet not adapted to conform to the special flanges of the track cannot normally be inserted into the track because its (typically flat) underside will foul the eminence of the track base before it can be full inserted.

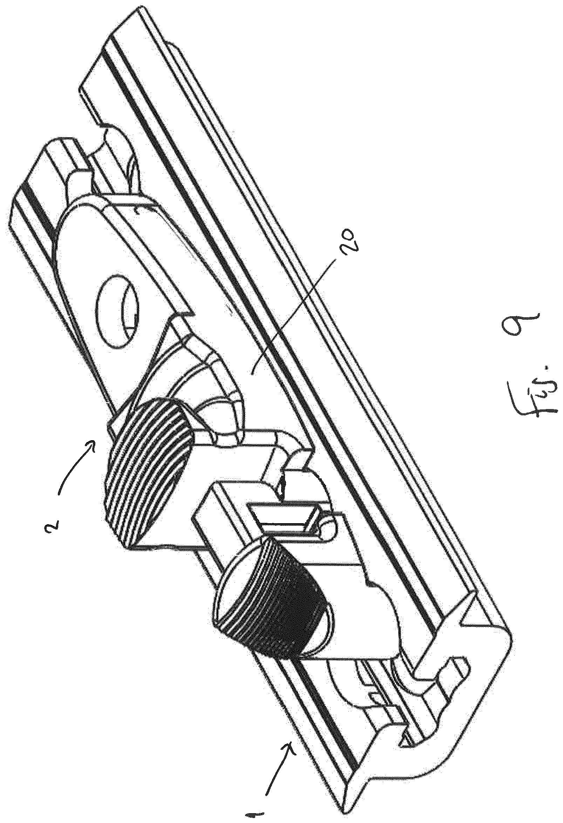

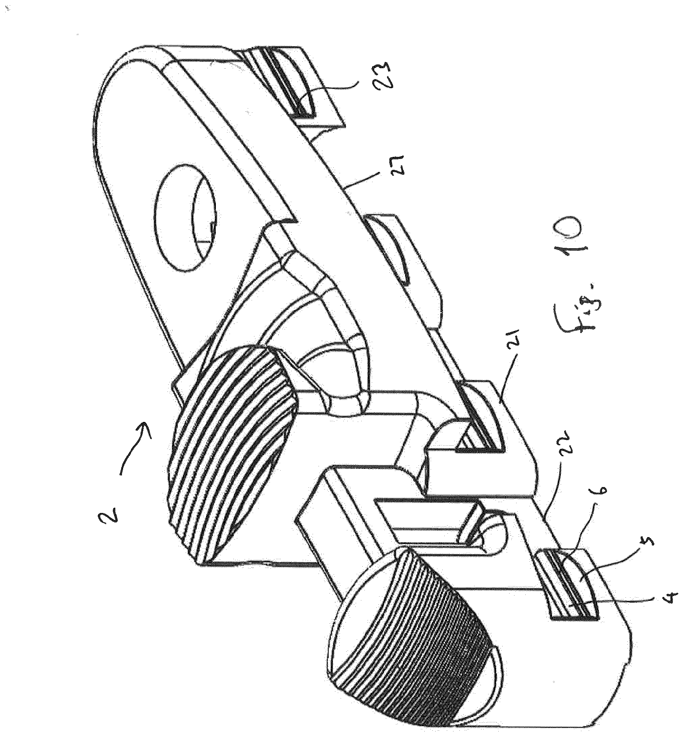

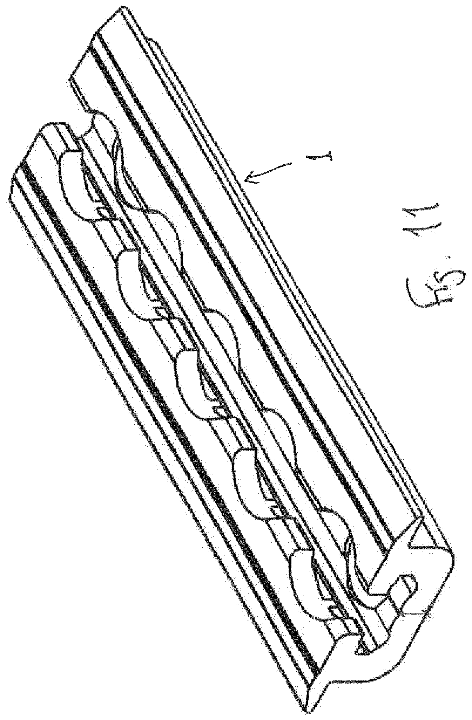

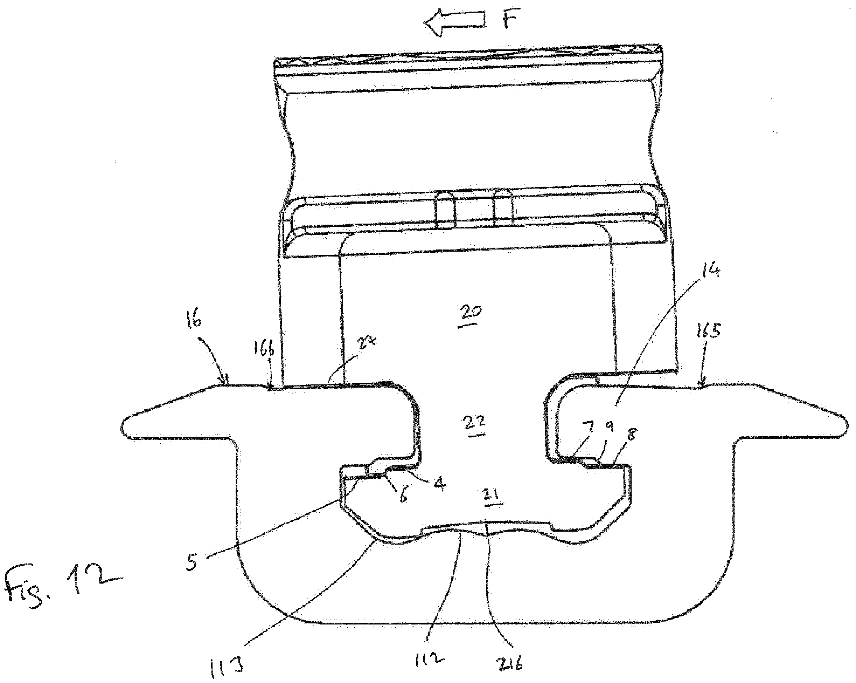

Figs. 9 to 12 show a second embodiment. This retains most general features of the first embodiment, but the contact regions of the track flange and device feet are differently formed, as is also the recess formation of the track outward face 16 that inhibits sideways sliding of the abutting device body 20 when tilted.

Specifically, in this embodiment the steps 6,9 of the foot contact region and track flange contact region are in the opposite lateral direction so that the (laterally) inner sub-regions 4,7 lie slightly outward (above) relative to the (laterally) outer sub-regions 5,8 of the components, although as before these regions in themselves are formed substantially parallel to the track plane. It is of course possible, in either embodiment, to adjust the surface angles in view of the expected slight tilt angle, to get more exact contact over these surfaces in the tilted condition. While this opposite direction of the step has a result of creating some positive overall angle (towards the centre) of the track flange inward surface, it makes the components easier to manufacture. Moreover the angle over the entire contact region is still less than in the prior art device, and is less than 10°, while the corresponding angles of the sub-regions 7,8 are substantially zero so that contact there generates little or no lateral component by cam action.

As regards the abutment against the track outer face, in this embodiment the undersurface 27 of the body 2 is flat and plain as in known devices, but the outward face 16 of the track features a slight ramp forming a depression, groove or inward angle 165 and a corresponding gentle shoulder incline 166 laterally outside it, increasing resistance to sideways movement of the body 20 in the tilted condition and thereby providing additional strength in the engagement between the anchorage device and the track.

## Claims

1. Anchorage system comprising an elongate track defining an interior channel and an anchorage device securable at any of plural longitudinal positions on the track;
the track comprising a base and having first and second sides, a longitudinal channel opening which opens in an outward face of the track and is defined between first and second retaining flanges at the outward face, said flanges projecting in towards one another and overlying the interior channel, the flanges having edge faces directed laterally towards one another across the channel opening and outward surfaces which are comprised in the outward face of the track;
the interior channel being defined by an outwardly-directed surface of the base, laterally inwardly-facing side wall surfaces defining lateral extremities of the channel, and by inwardly-directed faces of the retaining flanges directed towards the base;
the anchorage device comprising a body, at least one retaining foot and a stem portion connecting the body and the at least one retaining foot, the foot being laterally wider than the stem portion and the anchorage device being engageable in the track with the foot in the interior channel, the stem portion extending through the channel opening between the retaining flanges and the body outside the track with an inward face of the body overlying the outward face of the track;
the anchorage device being tiltable relative to the track around a longitudinal axis, under lateral load applied to the body of the anchorage device, to a tilted position at which tilt is limited by engagement of an outward face of the foot at the first side of the track with the inward face of the first retaining flange at respective contact regions of the foot and flange, and/or by engagement of an undersurface of the device body at the second side of the track against the outward face of the track, and/or by engagement of an inward face of the foot against the outwardly-directed surface of the base of the track, and wherein
the inward face of the retaining flange at said contact region is not angled outwards in the direction towards the median line of the channel, or is angled outwards at an angle of less than 10°.

2. Anchorage system of claim 1 in which said inward face of the retaining flange at said contact region is angled outwards at an angle of less than 5°, about 0°, or less than 0°.

3. Anchorage system of claim 1 or 2 in which said inward face of the retaining flange has distinct lateral sub-regions, and one, some or all of the sub-regions individually satisfy the requirement regarding the outward angle.

4. Anchorage system of any one of the preceding claims in which said outward face of the foot at the first side has one or more angle and form features in cross-sectional shape generally complementing those of the inward face of the retaining flange, at least at the contact region.

5. Anchorage system of any one of the preceding claims in which said outward face of the foot at the first side has an inward angle of the foot outward surface relative to the track plane, over the contact region or over one or more sub-regions thereof, less than 10°, preferably less than 5°, more preferably about 0° or less than 0°.

6. Anchorage system of any one of the preceding claims in which said inward face of the retaining flange is stepped in form, in transverse cross-section.

7. Anchorage system of claim 6 in which said outward face of the foot at the first side is also stepped in form in transverse cross-section, the direction(s) of the step(s) complementing that/those of the inward face of the retaining flange.

8. Anchorage system of claim 7 in which the contact region of the inward face of the retaining flange comprises a laterally outer sub-region and a laterally inner sub-region with a step between them, and the contact region of the outward face of the foot comprises a laterally outer sub-region and a laterally inner sub-region with a step between them complementary to that of the flange, whereby the respective laterally outer sub-regions and the respective laterally inner sub-regions of the flange and foot are contactable against one another.

9. Anchorage system of claim 8 in which the directions of said steps are such that the laterally outer sub-regions of the flange and foot are positioned outwardly in the system relative to the respective inner regions.

10. Anchorage system of claim 8 in which the directions of said steps are such that the laterally outer sub-regions of the flange and foot are positioned inwardly in the system relative to the respective inner regions.

11. Anchorage system of any one of claims 8 to 10 in which for some or all of said sub-regions, any outward angle in the direction towards the median line of the channel is less than 5°, less than 3° or less than 1°.

12. Anchorage system of any one of the preceding claims in which the lateral tilt angle in the tilted position, without deformation of the track or foot, is 4° or less or 3° or less relative to the non-tilted position.

13. Anchorage system of any one of the preceding claims comprising mutually inter-engaging formations on the underside of the device body at the second side, and on the outward face of the track at the second side, which engage one another in the tilted position to resist lateral movement of the device body relative to the track.

14. Anchorage system of claim 13 in which said mutually inter-engaging formations comprise an inward protrusion on the device body undersurface and a recess of the outward track face, such as at an indentation, groove or shoulder, which the inward protrusion engages in the tilted position.

15. Anchorage system of any one of the preceding claims in which the anchorage device, or at least a portion thereof having the at least one foot and stem portion, is a machined or cast component.

16. Anchorage system of any one of the preceding claims in which at least the track, and optionally also the at least one foot of the anchorage device, is symmetrical about the median plane with the first and second sides similarly formed.

17. A track for an anchorage system of any one of claims 1 to 16, the track being as defined in any one of said claims, for use with an anchorage device as defined in any one of said claims.

18. An anchorage device for an anchorage system of any one of claims 1 to 16, the anchorage device being as defined in any one of said claims, for use with a track as defined in any one of said claims.

19. Installation of an anchorage system of any one of claims 1 to 16, or of the track of such a system, in a vehicle with the track extending transversely of the vehicle.
